# EUROPÄISCHE PATENTSCHRIFT

(11) **EP 3 719 465 B1**
(45) Veröffentlichungstag und Bekanntmachung des Hinweises auf die Patenterteilung: **31.03.2021**
(21) Anmeldenummer: 20151565.7
(22) Anmeldetag: 14.01.2020
(51) Int. Cl.: G01K 7/20, G01K 7/16, G01K 1/08

(54) **ELEKTRISCHES INSTALLATIONSMODUL**
ELECTRIC INSTALLATION MODULE
MODULE D'INSTALLATION ÉLECTRIQUE

(30) Priorität: 03.04.2019 DE 102019108680
(43) Veröffentlichungstag der Anmeldung: 07.10.2020
(73) Patentinhaber: Insta GmbH, 58509 Lüdenscheid (DE)
(72) Erfinder: Wüller, Stefan, 58553 Halver (DE); Hopp, Christian, 44139 Dortmund (DE); Bröer, Stefan, 58579 Schalksmühle (DE)

(56) Entgegenhaltungen:
- EP-A2- 2 600 127
- DE-A1- 3 130 540
- US-B1- 6 356 191

## Beschreibung

Die Erfindung betrifft ein elektrisches Installationsmodul mit einem elektrischen/elektronischen Komponenten beinhaltenden Gehäuse, mit einer die elektrischen/elektronischen Komponenten bedienseitig bedeckenden Tragplatte und mit einem elektrischen, als Messwiderstand ausgelegten Sensor zum Erfassen einer Messgröße, etwa die Temperatur, die Luftfeuchte oder dergleichen.

Bei derartigen gebäudetechnischen Installationsmodulen handelt es sich typischerweise um sogenannte Raumbediengeräte. Diese Raumbediengeräte sind Bedien- und Anzeigegeräte, mit denen bestimmte gebäudetechnische Aktoren, etwa die Beleuchtung, die Jalousien, die Heizung und dergleichen bedient werden können. Zu diesem Zweck kann die Bedienoberfläche zur Betätigung der Aktoren Taster aufweisen. In einer anderen Ausgestaltung werden die Bedienelemente auf einem berührungssensitiven Display angezeigt. Die elektrischen/elektronischen Komponenten eines solchen Installationsmoduls befinden sich in dem Gehäuse desselben. Eingebaut ist in ein solches Installationsmodul mitunter auch ein Temperatursensor. Dieser dient zum Erfassen der Raumtemperatur, um in Abhängigkeit von der Raumtemperatur als gebäudetechnischen Aktor etwa die Heizungsanlage oder auch die Jalousien anzusteuern. Ein solcher Temperatursensor ist als Messwiderstand ausgeführt. Eine Temperaturänderung führt zu einer Änderung des Widerstandswertes, so dass in Abhängigkeit von dem aktuellen Widerstandswert auf die Temperatur geschlossen werden kann. Die elektrischen/elektronischen Komponenten und somit auch der Temperatursensor sind in dem Installationsmodul von der Umgebung gekapselt enthalten. Die Kapselung dient in erster Linie zum Schutz des Anwenders vor einem elektrischen Schlag und zur sicheren Montage des Gerätes. Darüber hinaus dient das Gehäuse zum Schutz der elektrische/elektronische Komponenten gegenüber elektrostatischer Entladungen durch den Anwender.

Der im Rahmen dieser Ausführung benutzte Begriff "elektrische/elektronische Komponenten" umfasst elektrische und/oder elektronische Bauteile, die Teil eines solchen Raumbediengerätes sein können.

Der Temperatursensor wird in ein solches Raumbediengerät integriert, damit nicht zusätzlich noch individuelle Temperatursensoren in dem Raum zur Temperaturerfassung installiert werden müssen. Hierzu gehört auch eine Stromversorgung. Allerdings hat die Implementierung eines Temperatursensors in ein solches Installationsmodul den Nachteil, dass eine Änderung der Raumtemperatur nur verzögert durch den Temperatursensor erfasst werden kann. Der mit einem solchen Temperatursensor gebildete Regelkreis für die Ansteuerung der Heizungsanlage ist daher sehr träge. Dieses ist für die Regelung einer Heizungsanlage ungünstig, da im Zusammenhang mit dem Ausregeln eines SOLL-Wertsprunges das Erreichen der Zieltemperatur durch den in einem solchen Installationsmodul verbauten Temperatursensor erst verzögert erfasst wird, und zwar erst dann, wenn sich das Raumbediengerät an die Temperaturänderung angepasst hat. Dieses führt zu einem an sich unerwünschten Überschwingen oder zu einem äußerst trägen Verhalten bei der Regelung der Heizungsanlage. Zudem ist bei einer solchen Anordnung des Temperatursensors dieser der Abwärme der elektrischen/elektronischen Komponenten ausgesetzt, was zu einer bezüglich der Raumtemperatur verfälschten Temperaturerfassung führt.

Aus DE 10 2010 019 113 A1 ist ein Verfahren bekannt, bei dem der Temperatursensor in einem Gehäuse eines Installationsmoduls integriert ist. Bei diesem vorbekannten Verfahren wird mittels des Temperatursensors eine Temperaturänderung erfasst. Unter Berücksichtigung der Umgebungsbedingungen des Temperatursensors innerhalb des Installationsmoduls wird die über ein Zeitintervall erfasste Temperaturänderung mit einem Faktor gewichtet, um den langsameren Anstieg der gemessenen Temperatur zu kompensieren. Mit diesem Wert wird ein Regelglied zum Ansteuern des Gebäudeinstallationsaktors angesteuert. Zwar kann mit diesem Verfahren eine spontanere Temperaturregelung aufgrund des Verwendens der erfassten Steigung der Temperaturänderung mit einem gewichteten Faktor erreicht werden. Problematisch ist bei diesem vorbekannten Verfahren jedoch der Umgang mit kurzzeitigen Temperatursprüngen. Auch bei einer solchen Temperaturänderung, die sich als solche nicht von einer ansonsten bestimmungsgemäß auszuregelnden Temperaturänderung unterscheidet, wird systemseitig versucht, den Temperatursprung auszuregeln.

Aus DE 10 2017 113 644 B3 ist ein weiteres Installationsmodul bekannt. Dieses verfügt über einen Einsatz und einen Aufsatz. Innerhalb des in einer Unterputzdose zu montierenden Einsatzes befindet sich ein erster Temperatursensor. Der Aufsatz ist über Steckkontakte an den Einsatz angeschlossen und trägt einen zweiten Temperatursensor. Bei diesem Installationsmodul dienen die beiden Temperatursensoren dazu, mit dem im Aufsatz befindlichen Temperatursensor die Raumtemperatur und mit dem im Einsatz befindlichen Temperatursensor die dort herrschende Temperatur erfassen zu können. Da der im Aufsatz befindliche Temperatursensor auch durch Wärme erzeugende Komponenten des Einsatzes erwärmt wird, wird bei diesem Installationsmodul die mit dem im Aufsatz befindlichen Sensor erfasste Temperatur mit der im Einsatz durch den zweiten Temperatursensor erfasste Temperatur korrigiert.

Aus der EP 2 600 127 A2 ist ein elektronisches Installationsgerät zur Ermittlung und Anzeige des aktuellen Temperaturzustandes in einem Raum oder in einem Gebäude bekannt. Dieses elektronische Installationsgerät ist mit mindestens einem im Installationsgerät integrierten Temperatursensor oder mindestens einer Erfassungs-Schnittstelle zum Anschluss mindestens eines externen Erfassungsgerätes oder einer an ein Netzwerk/Bussystem anschließbaren Busanbindung zum Anschluss mindestens eines externen Temperatursensors eines externen Erfassungsgerätes versehen. Das elektronische Installationsgerät verfügt über mindestens eine Steuerlogik/Auswertung/Verarbeitung zur Auswertung von permanent vom Teperatursensor oder Erfassungsgerät empfangenen Temperaturwerten zur Ermittlung eines auf der zeitlichen Entwicklung der Temperaturwerte über einen definierten Zeitraum basierenden aktuellen Temperaturzustandes des Raumes oder des Gebäudes, welcher ausdrückt, ob sich der Raum oder das Gebäude gerade in einer Abkühlungsphase mit fallender Temperatur oder in einer Aufheitphase mit steigender Temperatur oder am oberen Temperatur-Umkehrpunkt mit Übergang von der Aufheizphase zur Abkühlungsphase oder am unteren Temperatur-Umkehrpunkt mit Übergang von der Abkühlungsphase zur Aufheizphase befindet. Das elektrische Installationsgerät verfügt über eine Anzeigeeinheit zur Visualisierung des ermittelten Temperaturzustandes.

Aus der DE 31 30 540 A1 ist eine Schaltungsanordnung zur elektronischen Temperaturmessung mittels temperaturabhängiger Widerstände, insbesondere als Heizkörpertemperaturfühler für einen elektronischen Heizkostenverteiler bekannt, wobei wenigsten zwei parallelgeschaltete Messkreise vorgesehen sind, in denen jeweils temperaturabhängige Widerstände mit als Ventile dienenden Halbleiterbauelementen (Dioden oder Transistoren) in Reihe geschaltet sind. Die beiden als Zweipol geschalteten Messkreise werden mit einem von einer Wechselstromquelle gelieferten Wechselstrom mit einer vorgegebenen Frequenz gespeist, wobei die elektronischen Ventile der beiden Messkreise durch die jeweilige positive beziehungsweise negative Halbwelle des Wechselstroms durchgeschaltet werden. Durch Differenzbildung der an den beiden temperaturabhängigen Widerständen auftretenden Spannungsabfälle, welche den zu messenden Temperaturen proportional sind, lässt sich eine entsprechende Temperaturdifferenz ermitteln, beispielsweise die Differenz zwischen einer Heizkörpertemperatur und einer Raumtemperatur. Durch einen dritten Messkreis, welcher parallel zu den ersten und zweiten Messkreisen liegt, lassen sich die Messleitungen überwachen. Als temperaturabhängige Widerstände werden vorzugsweise NTC- bzw. PTC-Widerstände eingesetzt.

Aus der US 6 356 191 B1 ist ein Prozessfluid-Temperaturtransmitter bekannt, welcher eine Schaltung enthält, die die Fehlerkompensation aufgrund des Vorhandenseins einer oder mehrerer nicht zugeordneter Spannungsquellen in einer Schaltung der Widerstandstemperaturvorrichtung verbessert. Ein Verfahren zum Kompensieren eines solchen Fehlers ist aus dieser Druckschrift ebenfalls bekannt.

Für die Temperaturerfassung mit einem solchen Installationsmodul ist ein zweiteiliger Aufbau mit Einsatz und Aufsatz erforderlich. Eine präzise Umgebungstemperaturmessung allein mit dem Einsatz ist nicht möglich.

Ausgehend von diesem diskutierten Stand der Technik liegt der Erfindung daher die Aufgabe zugrunde, ein solches Installationsmodul dergestalt weiterzubilden, dass eine bezüglich der Qualität verbesserte Umgebungsgrößenerfassung, wie etwa der Raumtemperatur mit einem vereinfachten Hardware- und Auswerteaufwand möglich ist.

Gelöst wird diese Aufgabe erfindungsgemäß durch ein gemäß dem Anspruch 1 definiertes Installationsmodul.

Bei diesem elektrischen Installationsmodul wird zum Platzieren des Sensors, beispielsweise des Temperatursensors an oder unmittelbar hinter der Oberfläche einer Abdeckung keine aufwändige galvanische Trennung von der Netzspannung oder eine eigene galvanisch getrennte Stromversorgung benötigt, um den notwendigen Sicherheitsanforderungen zu genügen. Definiert sind diese durch den Körperstrom, mithin denjenigen Stromfluss, der durch den Körper einer Person fließt, wenn diese eine unter Netzspannung stehende Komponente berührt oder in dessen unmittelbare Nähe gelangt. Ein solcher Körperstromfluss ist nur möglich, wenn der Strom durch die Person in die Erde abfließen kann, mithin die Person selbst nicht gegenüber der elektrischen Erde isoliert ist. Dieses wird bei normalen Anwendungen die Regel sein. Erreicht wird dieses dadurch, dass der Sensorstromkreis ein Wechselstromkreis ist und in die phasenseitige Anschlussleitung des Sensors ein kapazitiver Vorwiderstand eingeschaltet ist. Dieser weist eine so hohe Impedanz auf, dass der durch den Sensor fließende Reststrom ohne zusätzliche Maßnahme für eine Auswertung der Sensordaten nicht ausreicht. Dieser Messstrom ist mithin so gering, dass selbst im Falle einer Berührung durch eine Person nur ein vernachlässigbarer Körperstrom fließt. Bei einem solchen kapazitiven Vorwiderstand handelt es sich um einen Schutzkondensator. Typischerweise wird man einen Kondensator der Y-Klasse einsetzen. In Abhängigkeit von der geforderten Impulsfestigkeit kann es sich hierbei um einen Schutzkondensator der Klasse Y1 oder Y2 handeln. Die Kapazität dieses Schutzkondensators ist, um den gewünschten Scheinwiderstand (Impedanz) bei Netzfrequenz zu erhalten, sehr gering. Erfindungsgemäß sind Werte für einen solchen Schutzkondensator zum Einsatz in einem solchen elektrischen Installationsmodul kleiner als 10 nF, insbesondere kleiner als 5 nF. In einem Ausführungsbeispiel wird als Schutzkondensator ein solcher mit einer Kapazität von 1 nF eingesetzt. Vorteilhaft an einer solchen Auslegung ist bereits, dass der Sensorstromkreis nicht durch entsprechende Maßnahmen galvanisch von der Netzspannung getrennt zu sein braucht, so dass der Hardwareaufwand zum Realisieren eines solchen Installationsmoduls entsprechend gering ist. Diese Maßnahme erlaubt ein Anordnen des Sensors unmittelbar auf oder hinter einer Oberfläche, insbesondere einer Bedienoberfläche des Installationsmoduls, so dass der Sensor in unmittelbarem Kontakt mit der Umgebung, aus der er eine Messgröße, wie beispielsweise die Temperatur, die Luftfeuchte, die Helligkeit oder dergleichen erfassen soll, angeordnet werden kann. Bei diesem Installationsmodul ist es auch möglich, ein elektrisches Steckverbinderteil, typischerweise eine Buchse vorzusehen, an die ein externer Sensor angeschlossen werden kann. Bei einer solchen Ausgestaltung befindet sich der kapazitive Vorwiderstand in der phasenseitigen Anschlussleitung vor dem elektrischen Kontakt des Steckverbinderteils.

Um Sensordaten zu erfassen, wird die Sperrwirkung des kapazitiven Vorwiderstandes beeinflusst. Zu diesem Zweck ist Teil des elektrischen Installationsmoduls ein an den Sensorstromkreis angeschlossener Frequenzgenerator. Hierbei wird der Umstand ausgenutzt, dass die Durchlässigkeit eines Schutzkondensators durch die Frequenz der anliegenden Wechselspannung beeinflusst werden kann. Durch den Frequenzgenerator wird eine solche Frequenz der Wechselspannung erzeugt, dass im Sensorstromkreis ein hinreichender Messstrom fließt. Die Größe des möglichen Körperstroms steht nicht im direkten Zusammenhang mit dem Messstrom, der Körperstrom wird durch die Kondensatoren sowie die Netzfrequenz und den Körperwiderstand bestimmt. Der in der Schaltung fließende Messstrom wird durch die interne hochfrequente Spannung getrieben. Es ist lediglich sicher zu stellen, dass die Amplitude der hochfrequenten Spannung ihrerseits keinen gefährlichen Körperstrom verursachen kann.

Bei diesem elektrischen Installationsmodul sind somit ohne besonderen Hardwareaufwand diejenigen Anforderungen erfüllt, damit ein netzspannungsgespeister Widerstandssensor unmittelbar hinter einer Abdeckung oder auch durch eine Öffnung einer solchen zugänglich oder auch unmittelbar auf der Oberfläche angeordnet werden kann.

Auch wenn die vorbeschriebenen Maßnahmen ausreichen, um den elektrischen Sicherheitsanforderungen zu genügen, können diese dadurch gesteigert werden, dass der Frequenzgenerator nur dann betrieben wird, wenn der Sensor ausgelesen werden soll. Für die gewünschten Zwecke einer Erfassung von Temperaturänderungen, die sich im Raum eher langsam abspielen, ist eine kontinuierliche Überwachung des Sensors nicht erforderlich. Beispielsweise würde es ausreichen, wenn dieser zu diesem Zweck alle ein bis drei Minuten kurzzeitig ausgelesen wird. Die gesamte übrige Zeit wird der Frequenzgenerator bei einer solchen Betriebsweise nicht betrieben, so dass dann der Sensorstromkreis durch den kapazitiven Vorwiderstand (Schutzkondensator) geschützt ist. Der Auslesetakt kann konstant sein. Durchaus möglich ist es, einen solchen Sensor bei Feststellen von Änderungen der überwachten Zustandsgröße für die Zeitspanne der festgestellten Änderungen mit kürzeren Zeitabständen auszulesen.

Um auch bei einem fehlpoligen Anschluss des elektrischen Installationsmoduls an die Netzspannung die gewünschte Sicherheit zu bieten, ist in einem Ausführungsbespiel vorgesehen, dass in beide Anschlussleitungen des Sensors jeweils ein kapazitiver Vorwiderstand eingeschaltet ist. Die Impedanz dieser beiden kapazitiven Vorwiderstände ist typischerweise gleich.

Gemäß einer Ausführung ist vorgesehen, dass der Sensor mit seinem kapazitiven Vorwiderstand Teil eines Spannungsteilers ist. Bei einer solchen Ausgestaltung bildet der Sensor und sein phasenseitig eingeschalteter kapazitiver Vorwiderstand einen ersten Ast des Spannungsteilers. In dem zweiten Ast ist ein weiterer Widerstand eingeschaltet. Zwischen den beiden Ästen befindet sich ein Knotenpunkt, durch den die beiden Äste des Spannungsteilers voneinander getrennt sind. An diesem Knotenpunkt wird die Teilerspannung abgegriffen. An diesem Knotenpunkt ist typischerweise auch der Frequenzgenerator angeschlossen. Ebenfalls ist der Eingang einer Auswerteschaltung an diesen Knotenpunkt angeschlossen. Am Eingang des Spannungsteilers liegt Netzspannung an.

Als Frequenzgenerator kann letztendlich jedes Bauteil oder jede Baugruppe eingesetzt werden, welches bzw. welche die Wechselspannungsfrequenz von 50 Hz zu erhöhen vermag. Hierbei kann es sich um elektronische Schalter, wie beispielsweise einen Transistor handeln. Gemäß einer Ausgestaltung eines solchen Installationsmoduls dient als Frequenzgenerator ein Mikrocontroller, und zwar typischerweise derjenige, der ohnehin Teil der elektrischen/elektronischen Komponenten des Installationsmoduls ist. Eine solche Funktion kann ohne Weiteres von einem solchen, auch nur relativ geringe Ressourcen aufweisenden Mikrocontroller ausgeführt werden. Die von dem Frequenzgenerator bereitgestellte Frequenz beträgt typischerweise mehr als 5 kHz.

Erfindungsgemäß erzeugt der Frequenzgenerator eine Frequenz zwischen 90 kHz und 120 kHz. Bei einer Ausgestaltung des Installationsmoduls mit einem Schutzkondensator mit 1 nF wird eine Frequenz zum Bereitstellen des Messstroms von 100 kHz bereitgestellt.

Eine Auswerteschaltung gemäß einem Ausführungsbeispiel verfügt über ein Verstärkungsglied zum Verstärken des Sensorsignals. Diesem vorgeschaltet ist in einem Ausführungsbeispiel ein Tiefpassfilter. Als Verstärkungsglied kann ein Operationsverstärker vorgesehen sein. Der typischerweise ohnehin vorhandene Mikrocontroller in dem Installationsmodul kann trotz relativ geringer Ressourcen für die Auswertung der erfassten Sensordaten genutzt werden.

Nachfolgend ist die Erfindung unter Bezugnahme auf die beigefügten Figuren anhand eines Ausführungsbeispiels erläutert. Es zeigen:
- **Fig. 1:**: eine perspektivische Ansicht eines elektrischen Installationsmoduls mit einem Temperatursensor zum Erfassen der Raumtemperatur und
- **Fig. 2:**: ein Schaltbild mit der Sensorschaltung zum Betreiben des Temperatursensors.

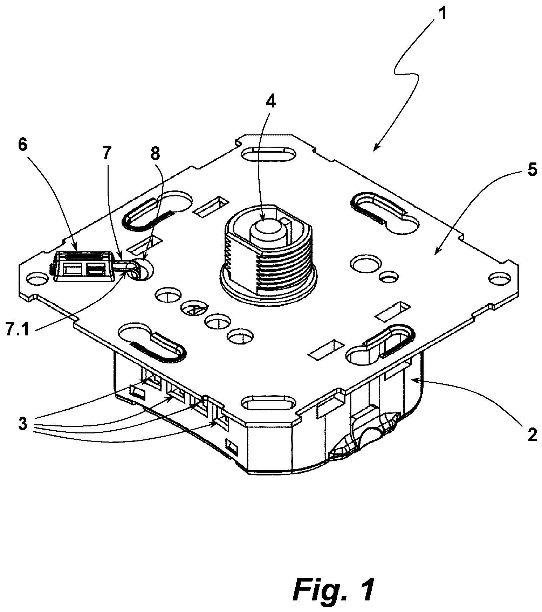

Ein elektrisches Installationsmodul 1 umfasst ein Gehäuse 2, in dem auf einer Leiterplatte elektrische/elektronische Komponenten angeordnet sind. Bei diesen handelt es sich um die notwendigen Komponenten, um mit dem Installationsmodul 1 einen elektrischen Aktor anzusteuern. Bei dem dargestellten Ausführungsbeispiel sitzt auf der Leiterplatte beispielsweise ein Triac. Erkennbar sind in Figur 1 elektrische Anschlussklemmen 3 zum Anschließen des Installationsmoduls an Netzspannung - einerseits - und zum Anschließen des zu betreibenden Aktors - andererseits. Teil der in dem Gehäuse 2 angeordneten elektrischen/elektronischen Komponenten ist ebenfalls ein Stellglied 4, über das manuell Einfluss auf den mit dem Installationsmodul 1 anzusteuernden Aktor genommen werden kann. Das Gehäuse 2 ist bei dem dargestellten Ausführungsbeispiel durch eine Tragplatte 5 bedienseitig verschlossen. Mittels der Tragplatte 5 wird das Installationsmodul 1, das mit seinem Gehäuse 2 typischerweise in eine Unterputzdose hineinreicht, wandseitig befestigt. Zu diesem Zweck ragt die Tragplatte 5 über den äußeren Abschluss des Gehäuses 2 hervor und verfügt über entsprechende Durchbrechungen, durch die Befestiger zum Festlegen des Installationsmoduls an einer Wand hindurchgreifen. Ein Temperatursensor 6, als Messwiderstand ausgeführt, befindet sich als beispielhafter Sensor auf der bedienseitigen Seite der Tragplatte 5 und ist an dieser befestigt. Seine Anschlüsse 7, 7.1 sind durch eine Durchbrechung 8 in der Tragplatte 5 in das Gehäuse 2 geführt und an die in dem Gehäuse 2 befindliche Leiterplatte angeschlossen.

Bei dem dargestellten Ausführungsbeispiel befindet sich der Sensor 6 im Bereich einer unteren Ecke, wenn das Installationsmodul 1 wandseitig montiert ist. Wärme generierende Komponenten innerhalb des Gehäuses 2, wie beispielsweise der angesprochene Triac befinden sich dann oberhalb des Stellgliedes 4. Da Wärme bestrebt ist, nach oben zu steigen, befindet sich der Sensor 6 somit an einer Position, die von Wärme produzierenden Komponenten innerhalb des Gehäuses 2 unbeeinflusst, jedenfalls weitestgehend unbeeinflusst ist. Diesem Zweck dient auch bei dem dargestellten Ausführungsbeispiel die Tragplatte 5, durch die die elektrischen/elektronischen Komponenten innerhalb des Gehäuses 2 von der Außenseite derselben getrennt sind.

Eine die Tragplatte 5 verblendete aus Designrahmen und Frontplatte bestehende Designabdeckung hat an seinem Seitenrand vorzugsweise schlitzartige Öffnungen, so dass Raumluft zwischen dem Designrahmen und der Tragplatte 5 zirkulieren kann. Der Sensor 6 steht dann in unmittelbarem Kontakt mit der umgebenden Raumluft. Es versteht sich, dass die den Designrahmen und die Frontplatte aufweisende Designabdeckung nicht zwei- bzw. mehrteilig ausgeführt werden muss; vielmehr kann diese auch einstückig ausgeführt sein.

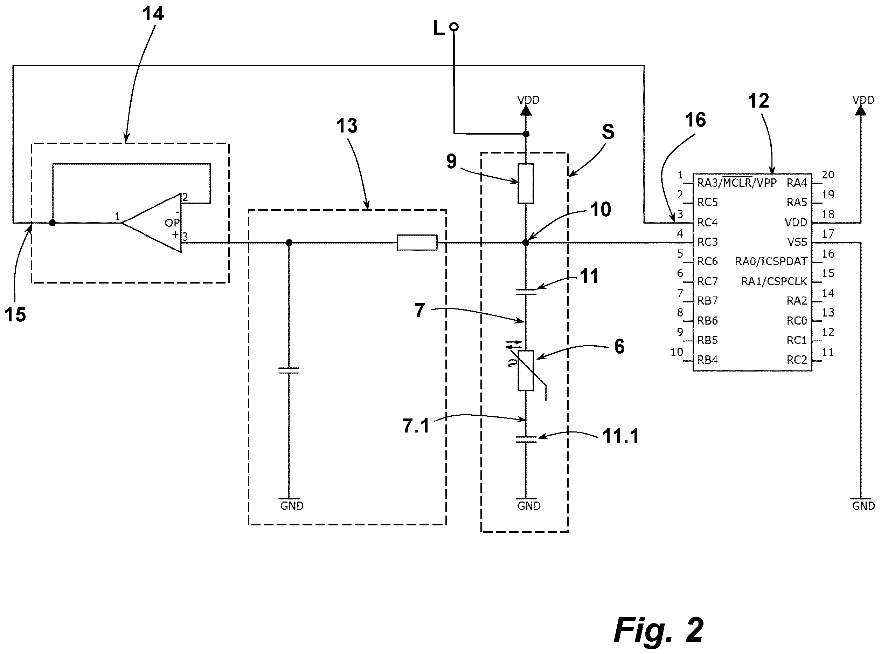

Bei dem Sensor 6 handelt es sich um einen Widerstandssensor, dessen aktueller Widerstand von seiner Temperatur abhängig ist. Bei dem in den Figuren dargestellten Ausführungsbeispiel ist der Sensor 6 Teil eines Spannungsteilers, zu dem ein zweiter Widerstand 9 gehört. Zwischen den beiden Ästen des Spannungsteilers befindet sich ein Knotenpunkt 10. Der Ast des Spannungsteilers mit dem Widerstand 9 kann eine galvanische Verbindung zur Phase L der Netzspannung (230 V) besitzen. Um die elektrische Betriebssicherheit bezüglich des mit Netzspannung betriebenen Sensors 6 zu gewährleisten, ist in den phasenseitigen Anschluss 7 ein Schutzkondensator 11 als kapazitiver Vorwiderstand eingeschaltet. Bei dem Schutzkondensator 11 handelt es sich um einen Kondensator der Klasse Y1 mit einer beispielhaften Kapazität von 1 nF. Bei dem dargestellten Ausführungsbeispiel ist, um dieselben Schutzeffekte auch bei einer Fehlpolung des Installationsmoduls 1 ebenfalls zu gewährleisten, auch in den Anschluss 7.1 ein Schutzkondensator 11.1 eingeschaltet. Beide Schutzkondensatoren 11, 11.1 sind identisch, verfügen somit über dieselbe Kapazität und damit auch über dieselbe Impedanz. Die Kapazität der Schutzkondensatoren 11, 11.1 ist so gewählt, dass bei der in Figur 2 gezeigten Verbindung zwischen der positiven Spannungsversorgung VDD und der Phase L dem Schutzkondensator 11 nachgeschaltet nur ein Strom mit einer solchen Stromstärke gegen Erde GND fließen kann, der für Personen ungefährlich ist, sollten diese in Kontakt mit einer der beiden Anschlussleitungen 7, 7.1 gelangen. Bei dem dargestellten Ausführungsbeispiel ist dieser Stromfluss so gering, dass ohne zusätzliche Maßnahmen Unterschiede im Widerstandswert des Sensors 6 nicht, jedenfalls nicht verlässlich mit den zur Verfügung stehenden einfachen Auswertemitteln erkannt werden können. Um dennoch die gewünschte Temperaturerfassung (Temperaturmessung) vornehmen zu können, wird auf den Schutzkondensator 11 bezüglich der Höhe seines Scheinwiderstandes Einfluss genommen, und zwar durch Erhöhen der Wechselspannungsfrequenz gegenüber der 50 Hz-Frequenz des Wechselspannungsnetzes. An dem Knotenpunkt 10 liegt zu diesem Zweck das Frequenzsignal eines Frequenzgenerators an, der bei dem dargestellten Ausführungsbeispiel durch einen Mikrocontroller 12 bereitgestellt ist. Der Mikrocontroller 12 generiert bei dem dargestellten Ausführungsbeispiel eine Frequenz von 100 kHz. Durch diese Beeinflussung des Schutzkondensators 11 wird sein Scheinwiderstand herabgesetzt, um einen hinreichenden Stromfluss durch den Sensor 6 bereitzustellen, dass dieser mit den zur Verfügung stehenden Mitteln ausgelesen werden kann, mithin die Änderungen seines Widerstandes in der gewünschten Auflösung durch Temperaturänderungen erkannt werden können. Dieser Strom ist kleiner als der bei derartigen elektrischen Installationen zugelassene Körperstrom. In Figur 2 ist der vorbeschriebene Sensorstromkreis mit dem Bezugszeichen S kenntlich gemacht.

Bei dem dargestellten Ausführungsbeispiel sind die Schutzkondensatoren 11, 11.1 als Keramik-Scheibenkondensatoren ausgeführt. Denkbar sind auch andere Kondensatorausgestaltungen, beispielsweise eine Ausgestaltung als Folienkondensatoren.

An den Knotenpunkt 10 ist eine Auswerteschaltung angeschlossen. Diese umfasst bei dem dargestellten Ausführungsbeispiel einen Tiefpassfilter 13 und ein Verstärkungsglied 14, das bei dem dargestellten Ausführungsbeispiel als Operationsverstärker ausgeführt ist. Der Ausgang 15 des Verstärkungsgliedes 14 ist an einen Auswerteeingang 16 des Mikrocontrollers 12 zum Auswerten der Sensordaten angeschlossen.

Die Beschreibung des Installationsmoduls 1 verdeutlicht, dass sich eine wirksame Raumtemperaturmessung mit einfachen Mitteln, insbesondere schaltungstechnisch einfachen Mitteln realisieren lässt. Die Ausführungen verdeutlichen aber auch, dass anstelle des Sensors 6 als Temperatursensor oder auch ergänzend zu diesem, ohne eine galvanische Trennung oder eine eigene Stromversorgung für den oder die Sensoren bereitstellen zu müssen, auch zahlreiche andere Sensoren Teil eines solchen Installationsmoduls sein können, wie beispielsweise ein Feuchtigkeitssensor zum Erfassen der Luftfeuchte im Raum, ein Helligkeitssensor, ein Geräuschsensor oder dergleichen. Diese können ohne Weiteres auch für Benutzer berührbar oder nur durch eine dünne Abdeckung getrennt oberflächennah zum Raum angeordnet sein.

### Bezugszeichenliste

- 1: Installationsmodul
- 2: Gehäuse
- 3: Anschlussklemme
- 4: Stellglied
- 5: Tragplatte
- 6: Sensor
- 7, 7.1: Anschluss
- 8: Durchbrechung
- 9: Widerstand
- 10: Knotenpunkt
- 11, 11.1: Schutzkondensator, kapazitiver Vorwiderstand
- 12: Mikrocontroller, Frequenzgenerator
- 13: Tiefpassfilter
- 14: Verstärkungsglied
- 15: Ausgang
- 16: Auswerteeingang

- GND: Erde
- L: Phase
- S: Sensorstromkreis
- VDD: Positive Spannungsversorgung

## Patentansprüche

1. Elektrisches Installationsmodul mit einem elektrische/elektronische Komponenten beinhaltenden Gehäuse (2), mit einer die elektrischen/elektronischen Komponenten bedienseitig bedeckenden Tragplatte (5) und mit einem elektrischen, als Messwiderstand ausgelegten Sensor (6) zum Erfassen einer Messgröße, etwa die Temperatur, die Luftfeuchte oder dergleichen, wobei der Sensorstromkreis (S) ein an Netzspannung anschließbarer Wechselstromkreis ist, wobei in seinen phasenseitigen Anschluss (7) ein kapazitiver Vorwiderstand beziehungsweise Schutzkondensator (11) mit einer solchen Impedanz eingeschaltet ist, dass der durch den Sensorstromkreis (S) fließende Strom ohne zusätzliche Maßnahme für eine Auswertung der Sensordaten nicht ausreicht, wobei der kapazitive Vorwiderstand beziehungsweise Schutzkondensator (11) eine Kapazität von weniger als 10 nF, insbesondere von weniger als 5 nF hat, und wobei als zusätzliche Maßnahme zum Bereitstellen eines ausreichenden Messstroms an den Sensorstromkreis (S) ein Frequenzgenerator (12) zum Bereitstellen einer gegenüber der Netzfrequenz höheren Frequenz angeschlossen ist, wobei der Frequenzgenerator (12) eine Frequenz von 90 bis 120 kHz, insbesondere von etwa 100 kHz erzeugt, und dass der Sensor (6) auf der bedienseitigen Seite der Tragplatte (5) angeordnet ist, wobei seine elektrischen Anschlüsse (7, 7.1) auf die andere Seite der Tragplatte (5) geführt und an die elektrischen/elektronischen Komponenten angeschlossen sind.

2. Installationsmodul nach Anspruch 1, **dadurch gekennzeichnet, dass** der Sensor (6) mit seinem kapazitiven Vorwiderstand beziehungsweise Schutzkondensator (11) ein erster Ast eines in einem zweiten, durch einen Knotenpunkt von dem ersten Ast getrennten Ast mit zumindest einem weiteren Widerstand (9) aufweisenden Spannungsteilers ist.

3. Installationsmodul nach Anspruch 2, **dadurch gekennzeichnet, dass** an den Knotenpunkt (10) des Spannungsteilers der Ausgang des Frequenzgenerators (12) angeschlossen ist.

4. Installationsmodul nach einem der Ansprüche 1 bis 3, **dadurch gekennzeichnet, dass** einem Mikrocontroller (12) die Funktion des Frequenzgenerators zukommt.

5. Installationsmodul nach einem der Ansprüche 2 bis 4, **dadurch gekennzeichnet, dass** an den Knotenpunkt (10) eine Auswerteschaltung angeschlossen ist.

6. Installationsmodul nach einem der Ansprüche 1 bis 5, **dadurch gekennzeichnet, dass** der kapazitive Vorwiderstand beziehungsweise Schutzkondensator (11) als Keramik-Scheibenkondensator ausgeführt ist.

7. Installationsmodul nach einem der Ansprüche 1 bis 6, **dadurch gekennzeichnet, dass** in beide Anschlüsse (7, 7.1) des Sensors (6) ein kapazitiver Vorwiderstand beziehungsweise ein Schutzkondensator (11, 11.1) eingeschaltet ist.

8. Installationsmodul nach Anspruch 7, **dadurch gekennzeichnet, dass** die Impedanz der beiden kapazitiven Vorwiderstände beziehungsweise Schutzkondensatoren (11, 11.1) gleich ist.

9. Installationsmodul nach Anspruch 5, **dadurch gekennzeichnet, dass** die Auswerteschaltung ein Tiefpassfilter (13) und ein Verstärkungsglied (14) umfasst.

10. Installationsmodul nach Anspruch 9, **dadurch gekennzeichnet, dass** das Verstärkungsglied (14) als Operationsverstärker ausgeführt ist.

11. Installationsmodul nach Anspruch 9 oder 10 in Rückbezug auf Anspruch 4, **dadurch gekennzeichnet, dass** der Ausgang (15) des Verstärkungsgliedes (14) an einen Auswerteeingang (16) des Mikrocontrollers (12) angeschlossen ist.

12. Installationsmodul nach einem der Ansprüche 1 bis 11, **dadurch gekennzeichnet, dass** der Sensor (6) ein Temperatursensor ist.

## Claims

1. Electrical installation module with a housing (2) containing electrical/electronic components, with a support plate (5) covering the electrical/electronic components on the operating side and with an electrical sensor (6) designed as a measuring resistor for detecting a measured variable, such as temperature, air humidity or the like, wherein the sensor circuit (S) is an alternating current circuit which can be connected to mains voltage, wherein a capacitive series resistor or protective capacitor (11) with such an impedance is connected into its phase-side connection (7) that the current flowing through the sensor circuit (S) is not sufficient for an evaluation of the sensor data without additional measures, wherein the capacitive series resistor or protective capacitor (11) has a capacitance of less than 10 nF, in particular of less than 5 nF, and wherein, as an additional measure for providing a sufficient measuring current, a frequency generator (12) is connected to the sensor circuit (S) for providing a higher frequency than the mains frequency, the frequency generator (12) generating a frequency of 90 to 120 kHz, in particular of about 100 kHz, and in that the sensor (6) is arranged on the operator side of the support plate (5), its electrical connections (7, 7.1) being lead to the other side of the support plate (5) and connected to the electrical/electronic components.

2. Installation module in accordance with Claim 1, **characterized by the fact** that the sensor (6) with its capacitive series resistor or protective capacitor (11) is a first branch of a voltage divider having at least one further resistor (9) in a second branch separated from the first branch by a node.

3. Installation module in accordance with Claim 2, **characterized by the fact** that the output of the frequency generator (12) is connected to the node (10) of the voltage divider.

4. Installation module in accordance with any of Claims 1 to 3, **characterized by the fact** that the function of the frequency generator is assigned to a microcontroller (12).

5. Installation module in accordance with any of Claims 2 to 4, **characterized by the fact** that an evaluation circuit is connected to the node (10).

6. Installation module in accordance with any of Claims 1 to 5, **characterized by the fact** that the capacitive series resistor or protective capacitor (11) is designed as a ceramic disc capacitor.

7. Installation module in accordance with any of Claims 1 to 6, **characterized by the fact** that a capacitive series resistor or a protective capacitor (11, 11.1) is connected in both leads (7, 7.1) of the sensor (6).

8. Installation module in accordance with Claim 7, **characterized by the fact** that the impedance of the two capacitive series resistors or protective capacitors (11, 11.1) is the same.

9. Installation module in accordance with Claim 5, **characterized by the fact** that the evaluation circuit comprises a low-pass filter (13) and an amplifier (14).

10. Installation module in accordance with Claim 9, **characterized by the fact** that the amplifier (14) is designed as an operational amplifier.

11. Installation module in accordance with Claim 9 or 10 with reference to 4, **characterized by the fact** that the output (15) of the amplifier (14) is connected to an evaluation input (16) of the microcontroller (12).

12. Installation module in accordance with any of Claims 1 to 11, **characterized by the fact** that the sensor (6) is a temperature sensor.

## Revendications

1. Module d'installation électrique avec un boîtier (2) contenant des composants électriques/électroniques, avec une plaque de support (5) recouvrant les composants électriques/électroniques du côté opérateur, et avec un capteur électrique (6) conçu comme une résistance de mesure pour détecter un paramètre mesuré, tel que la température, l'humidité ou similaire, dans lequel le circuit de capteur (S) est un circuit de courant alternatif qui peut être raccordé à la tension du réseau, dans lequel une résistance série capacitive ou un condensateur de protection (11) avec une telle impédance est connecté dans son branchement côté phase (7) que le courant circulant à travers le circuit de capteur (S) n'est pas suffisant pour l'évaluation des données du capteur sans mesures supplémentaires, dans lequel la résistance série capacitive ou le condensateur de protection (11) a une capacité inférieure à 10 nF, en particulier inférieure à 5 nF, et dans lequel, comme mesure supplémentaire pour fournir un courant de mesure suffisant, un générateur de fréquence (12) est connecté au circuit de capteur (S) pour fournir une fréquence qui est supérieure à la fréquence du réseau, dans lequel le générateur de fréquence (12) génère une fréquence de 90 à 120 kHz, en particulier d'environ 100 kHz, et en ce que le capteur (6) est disposé sur le côté opérateur de la plaque de support (5), ses connexions électriques (7, 7.1) étant amenées de l'autre côté de la plaque de support (5) et connectées aux composants électriques/électroniques.

2. Module d'installation selon la revendication 1, **caractérisé en ce que** le capteur (6) avec sa résistance série capacitive ou son condensateur de protection (11) est une première branche d'un diviseur de tension ayant au moins une autre résistance (9) dans une deuxième branche séparée de la première branche par un noeud.

3. Module d'installation selon la revendication 2, **caractérisé en ce que** la sortie du générateur de fréquence (12) est reliée au noeud (10) du diviseur de tension.

4. Module d'installation selon l'une des revendications 1 à 3, **caractérisé en ce que** la fonction de générateur de fréquence est attribuée à un microcontrôleur (12).

5. Module d'installation selon l'une des revendications 2 à 4, **caractérisé en ce qu'un** circuit d'évaluation est connecté au noeud (10).

6. Module d'installation selon l'une des revendications 1 à 5, **caractérisé en ce que** la résistance série capacitive ou le condensateur de protection (11) est conçu comme un condensateur à disque céramique.

7. Module d'installation selon l'une des revendications 1 à 6, **caractérisé en ce qu'une** résistance série capacitive ou un condensateur de protection (11, 11.1) est connecté dans les deux bornes (7, 7.1) du capteur (6).

8. Module d'installation selon la revendication 7, **caractérisé en ce que** l'impédance des deux résistances série capacitives ou condensateurs de protection (11, 11.1) est la même.

9. Module d'installation selon la revendication 5, **caractérisé en ce que** le circuit d'évaluation comprend un filtre passe-bas (13) et un amplificateur (14).

10. Module d'installation selon la revendication 9, **caractérisé en ce que** l'amplificateur (14) est conçu comme un amplificateur opérationnel.

11. Module d'installation selon la revendication 9 or 10 avec renvoi à la revendication 4, **caractérisé en ce que** la sortie (15) de l'amplificateur (14) est reliée à une entrée d'évaluation (16) du microcontrôleur (12).

12. Module d'installation selon l'une des revendications 1 à 11, **caractérisé en ce que** le capteur (6) est un capteur de température.
